# FASCICULE DE BREVET EUROPEEN

(11) **EP 3 194 724 B1**
(45) Date de publication et mention de la délivrance du brevet: **28.11.2018**
(21) Numéro de dépôt: 15763020.3
(22) Date de dépôt: 15.09.2015
(51) Int. Cl.: F01D 5/00, B64C 11/20, F01D 5/14, F01D 5/28, B24C 1/10

(54) **PROCÉDÉ DE TRAITEMENT D'UNE PIÈCE COMPOSITE**
VERFAHREN ZUR BEHANDLUNG EINES VERBUNDSTOFFTEILS
METHOD FOR TREATING A COMPOSITE PART

(30) Priorité: 17.09.2014 FR 1458776
(43) Date de publication de la demande: 26.07.2017
(73) Titulaire: Europe Technologies, 44470 Carquefou (FR)
(72) Inventeur: GASCHER, Patrick, 44620 La Montagne (FR); MANGEARD, Eric, 44850 Mouzeil (FR); DESFONTAINE, Vincent, 44840 Les Sorinieres (FR)
(74) Mandataire: Nony
(86) Numéro de dépôt international: PCT/EP2015/071092
(87) Numéro de publication internationale: WO 2016/041957

(56) Documents cités:
- FR-A1- 2 970 197
- US-A1- 2010 162 565

## Description

La présente invention concerne les procédés de traitement de pièces composites et plus particulièrement celles comportant un bouclier de protection métallique fixé sur une âme de support à l'aide d'un liant. L'invention concerne notamment la séparation d'un élément métallique rapporté sur une pièce composite.

De nombreuses pièces composites, par exemple en fibres de carbone, sont revêtues en surface d'un bouclier métallique, notamment en titane, visant à les protéger contre les phénomènes d'abrasion et accroître leur résilience. Ainsi, il est connu de réaliser des pales ou aubes de turbines avec une âme en matière composite, monolithique ou sandwich, sur laquelle un bouclier en titane est collé afin de servir de renfort superficiel et/ou structurel. Les brevets EP 1908 919 B1 et EP 0854 208 B1 divulguent des exemples de telles pièces.

Au cours de l'utilisation de la turbomachine, le bouclier métallique est susceptible de s'user ou recevoir des chocs qui peuvent l'endommager.

La réparation de la pièce se heurte à la difficulté d'enlever le bouclier métallique sans dégrader l'âme composite, la colle utilisée étant particulièrement puissante.

EP 0 854 208 B1 propose d'éliminer le bouclier métallique par électroérosion, ce qui implique l'utilisation de produits chimiques, avec les contraintes d'utilisation et environnementales correspondantes.

La demande de brevet FR 2 970 197 concerne un procédé de désolidarisation/solidarisation par induction d'une pièce mécanique ferromagnétique collée à une pièce mécanique. Ce procédé nécessite des propriétés ferromagnétiques de la pièce à traiter. De plus, le procédé proposé implique une élévation en température importante pour obtenir un allongement significatif de la pièce mécanique ferromagnétique, ce qui peut endommager la partie composite.

L'invention vise à résoudre ce problème de séparation du bouclier métallique et de l'âme sans endommagement de cette dernière, de façon à permettre de la réutiliser avec un nouveau bouclier métallique.

L'invention y parvient grâce à un procédé de traitement d'une pièce composite comportant un bouclier métallique fixé sur une âme à l'aide d'un liant, en vue de séparer le bouclier de l'âme, comportant les étapes consistant à :
a) soumettre le bouclier métallique à des contraintes de compression tendant à l'allonger,
b) si nécessaire, chauffer la pièce ou la refroidir pour ramollir ou fragiliser le liant.

Le procédé peut comporter une étape (c) de séparation du bouclier et de l'âme.

L'invention permet de soumettre, du fait de la tendance du bouclier à s'allonger en réponse à l'introduction des contraintes de compression, le liant et/ou l'interface de celui-ci avec l'âme ou le bouclier à des contraintes de cisaillement ou d'arrachement et de faciliter le détachement du bouclier de l'âme et ainsi d'éviter d'exposer l'âme, lors de l'enlèvement du bouclier à des actions susceptibles de la détériorer.

L'invention permet de réparer de nombreuses pièces utilisées notamment dans l'aéronautique, qui jusqu'à présent était remplacées entièrement, du fait de la difficulté rencontrée pour séparer le bouclier de l'âme sans détériorer cette dernière ou de côuts d'opération excessifs, liés à l'utilisation de produits chimiques.

L'étape a) est de préférence effectuée avant l'étape b). En variante, l'étape b) est effectuée avant l'étape a). En variante encore, les étapes a) et b) ont lieu simultanément.

Le cas échéant, l'étape a) est appliquée exclusivement, lorsque l'introduction des contraintes de compression suffit à libérer le bouclier, notamment en cas de faible épaisseur de liant et/ou de liant peu résistant. Dans ce cas, la contrainte de cisaillement générée par l'allongement de la partie métallique est supérieure à la limite admissible par le liant, notamment à l'interface avec l'âme ou le bouclier.

L'étape a) est mise en oeuvre avantageusement de manière à générer une déformation plastique du bouclier métallique, et induire dans celui-ci des contraintes résiduelles.

De préférence, on réalise les étapes a) puis b) lorsque la pièce est chauffée. Cela permet de chauffer à la température nécessaire pour un taux de contrainte introduit donné, ce qui permet d'optimiser les paramètres de chauffe et les paramètres liés à l'introduction de contraintes.

Notamment dans le cas où l'on refroidit la pièce, on peut faire l'étape b) avant l'étape a). Le froid engendre un durcissement du liant et donc une augmentation des contraintes de cisaillement. De préférence, dans ce cas, les opérations a) et b) sont très rapprochées dans le temps, ne laissant pas le temps à la pièce de se réchauffer outre mesure entre elles.

L'introduction des contraintes de compression à l'étape a) peut être effectuée mécaniquement ou par onde de choc.

L'introduction des contraintes de compression peut notamment être effectuée par grenaillage de précontrainte conventionnel ou ultrasons, redressage, martelage, galetage, flap-peening, choc laser, cavitation peening (grenaillage par cavitation) et/ou auto frettage.

De préférence, l'introduction des contraintes de compression est effectuée par grenaillage ou martelage, mieux par grenaillage ou martelage ultrasons, le grenaillage étant de préférence effectué à l'aide d'un appareil à projectile(s) captif(s).

L'intensité ALMEN de traitement engendrant des contraintes de compression est de préférence d'au moins F10N à F70C, mieux F30N à F10C.

L'introduction des contraintes de compression peut s'effectuer localement à l'aide d'un appareil déplacé sur la pièce ou d'un déplacement de la pièce relativement à l'appareil, qui peut alors être statique.

L'apport de chaleur ou de froid à l'étape b) peut être réalisé par conduction et/ou convection et/ou rayonnement.

L'apport de chaleur ou de froid peut être effectué en plaçant la pièce dans un four ou une étuve ou dans une enceinte réfrigérée.

L'apport de chaleur ou de froid peut encore être effectué localement à l'aide d'un appareil déplacé sur la pièce, ou avec la pièce se déplaçant sous le moyen d'application du procédé. On peut avoir une source de chaleur ou de froid jumelée à l'outil utilisé pour appliquer les contraintes de compression, notamment un outil de redressage.

L'apport de chaleur ou de froid peut s'effectuer de manière à amener, localement au moins, le liant à une température comprise entre -273, 15 °C et 450 °C.

Le bouclier métallique peut être usiné avant l'introduction des contraintes de compression, de préférence pour éliminer une partie frontale de celui-ci, notamment lorsqu'il définit un bord d'attaque de la pièce relativement étroit.

La pièce peut être une pale ou une aube d'une turbomachine et le bouclier définir le bord d'attaque de cette pale ou aube.

Le bouclier peut être, après décollement de l'âme, remplacé par un nouveau bouclier métallique collé sur l'âme.

L'invention pourra être mieux comprise à la lecture de la description détaillée qui va suivre, d'exemples de mise en oeuvre non limitatifs de celle-ci, et à l'examen du dessin annexé, sur lequel :
La figure 1 représente en perspective un exemple de pièce composite pouvant être traitée avec le procédé selon l'invention pour décoller le bouclier de l'âme,
la figure 2 est une coupe transversale de la pièce de la figure 1, dans le plan II de la figure 1, et
- la figure 3 illustre la partie du bouclier à éliminer par usinage préalable, dans un exemple de mise en oeuvre.

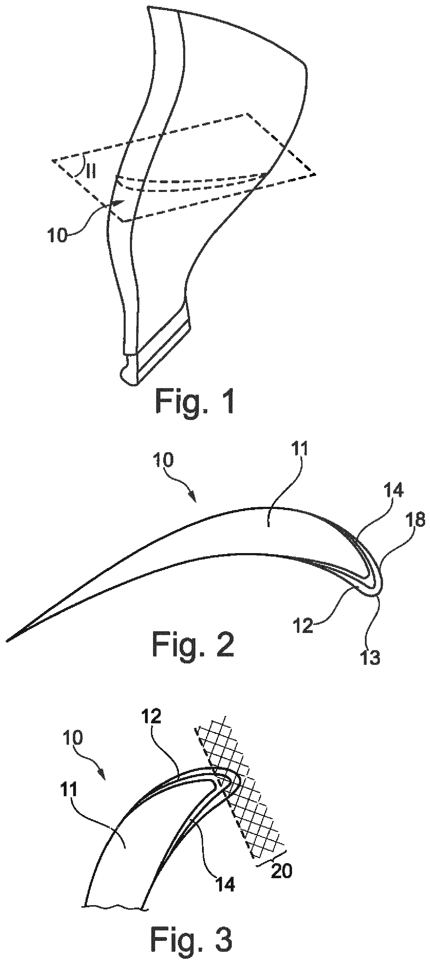

La pièce 10 représentée sur les figures 1 et 2 est une aube mobile de soufflante de turbomachine. L'aube 10 comporte une âme composite 11, étant par exemple obtenue par drapage ou tissage d'un matériau composite thermoplastique ou thermodurcissable. Ce dernier peut être un assemblage de fibres de carbone tissées et moulées par un procédé d'injection sous vide RTM (Resin Transfer Moulding). L'âme 11 est réalisée avec une forme aérodynamique et elle est recouverte sur son bord d'attaque par une peau métallique 12 formant bouclier, qui est fixée par un liant 14 sur l'âme. La peau 12 définit par sa partie frontale le bord d'attaque 13 de la pièce 10.

L'invention consiste à allonger le bouclier métallique par la mise en oeuvre d'une technique de compression consistant dans l'introduction de contraintes de compression depuis la face extérieure 18 du bouclier.

### Introduction des contraintes de compression

De nombreuses techniques peuvent être utilisées pour introduire ces contraintes de compression.

On peut préférer utiliser une technique qui permet un traitement local de la pièce, sans avoir à démonter celle-ci du reste de la machine.

On peut également privilégier une technique qui permet un traitement sur l'ensemble du bouclier en déplaçant par exemple un appareil de traitement le long de celui-ci.

Une première technique pouvant être utilisée pour introduire les contraintes de compression est le grenaillage conventionnel de précontrainte.

Cette technique consiste à projeter sur le bouclier des projectiles qui peuvent être divers, par exemple des billes ou des fils coupés, dont la taille peut aller de 0,3 mm à 10 mm, et de préférence de 1 mm à 4 mm, les projectiles étant en métaux, céramique, verre ou matériaux composites, et préférentiellement en acier ou céramique.

Les projectiles peuvent être projetés sur la surface à traiter avec un angle d'incidence par rapport à la normale qui va de 0° à 90°, et préférentiellement de 0° à 45°.

L'intensité ALMEN du traitement peut atteindre F10N à F70C, et préférentiellement F30N à F10C.

Une autre technique pouvant être utilisée pour introduire les contraintes de compression est le grenaillage par ultrasons, comme divulgué par exemple dans WO 2008 047 048.

Les projectiles peuvent être les mêmes que dans le cas du grenaillage conventionnel de précontrainte, et par exemple être formé de billes, de fils coupés, ..., leur taille allant de préférence de 0,3mm à 10mm, et préférentiellement encore de 1mm à 4mm. Les matériaux utilisés sont de préférence choisis parmi les métaux, les céramiques, le verre, les composites, et préférentiellement l'acier et les céramiques.

Les contraintes de compression peuvent également être introduites par un procédé de redressage, à l'aide d'aiguilles ou autre projectiles qui acquièrent de la vitesse au contact d'une surface vibrante et viennent impacter la surface à traiter. Ces projectiles agissent comme un réseau de petits marteaux percutant la surface à traiter à haute fréquence et de manière indépendante les uns des autres. Des contraintes de compression superficielles sont ainsi crées. La différence de contraintes entre la surface et le coeur du bouclier entraine des modifications de la courbure de celui-ci. La surface vibrante peut être notamment mise en vibration par des moyens pneumatiques ou par un ou plusieurs moteurs linéaires ou par une ou plusieurs sonotrodes.

Les contraintes de compression peuvent encore être introduites par une technique de martelage, à l'aide par exemple d'un pistolet à marteler tel que décrit dans US 6343495. Dans cette technique, on projette sur la surface à traiter un ou plusieurs projectiles, tels que des aiguilles ou marteaux, présentant de préférence une tête sphérique, grâce à la vibration d'une sonotrode. Le choc des projectiles sur la surface à traiter génère les contraintes de compression recherchées. La taille de la tête qui impacte la surface à traiter va par exemple de 0,5mm à 20mm de diamètre ou de largeur, et plus préférentiellement de 1 à 6mm ; la longueur des projectiles va par exemple de 2 à 50mm. On peut utiliser pour réaliser les projectiles tout matériau choisi parmi les métaux, céramiques, plastiques, composites, et préférentiellement l'acier.

Les projectiles sont confinés entre la surface vibrante qui leur transmet l'énergie et la surface à traiter. L'amplitude de vibration de la surface vibrante va par exemple de 10 micromètres c/c à 200 micromètres c/c, et plus préférentiellement de 30 à 80 micromètres c/c.

La fréquence de la surface vibrante est par exemple comprise entre 15 kHz et 80 kHz, mieux entre 20 kHz et 40 kHz.

L'intensité ALMEN de traitement peut aller de F10N à F70C, préférentiellement F30N à F10C.

La technique utilisée pour introduire les contraintes de compression peut encore être du « flap peening ».

Le flap peening utilise une lamelle équipée à ses extrémités de *media* incrustés dans une matrice, comme décrit dans le brevet US3638464 A.

La lamelle est installée sur un axe et mise en rotation à l'aide d'une meule pneumatique ou électrique. La lamelle est appliquée sur la pièce à traiter et les *media* viennent frapper celle-ci.

Les *media* font par exemple une taille de 0,3 mm à 10 mm, préférentiellement de 1 mm à 4 mm. Ils peuvent être en métaux, céramiques, verre ou composites, préférentiellement en acier ou céramique.

La vitesse de rotation va par exemple de 0 à 10000 tours par minute, préférentiellement entre 1500 tours par minute et 6000 tours par minute. L'angle d'incidence des *media* par rapport à la normale à la surface à traiter peut aller de 0° à 90°. L'intensité ALMEN du traitement va de préférence F10N à F70C, plus préférentiellement de F30N à F10C.

Les contraintes de compression peuvent encore être introduites par une technique de choc laser, comme décrit dans le brevet US 6670577 B2.

Les ondes de choc sont générées par une explosion due à des impulsions laser de très grande puissance, qui permettent d'obtenir des pressions suffisantes pour dépasser la limite d'élasticité des matériaux et une déformation plastique des couches superficielles du bouclier

La mise en oeuvre s'effectue avec un faisceau laser dirigé sur la surface à traiter qui crée un plasma.

Les contraintes de compression peuvent encore être introduites par galetage ou procédé similaire, notamment par le procédé dit LPB (low plasticity brunishing) qui est un procédé similaire au galetage utilisant une bille à la place d'un galet.

La couche superficielle de la pièce est alors déformée plastiquement en faisant rouler sur sa surface un galet ou une bille sous forte charge.

On peut encore appliquer les contraintes de compression par autofrettage.

Cela revient à appliquer sur le bouclier une pression supérieure à la pression de fonctionnement, afin de provoquer une déformation plastique hétérogène à travers son épaisseur. Lors du relâchement de la pression appliquée, apparaissent des contraintes de compression résiduelles dites d'autofrettage. Cette pression est appliquée sur une courte durée à l'aide d'un fluide (liquide, gaz) ou d'un outil conique, de manière similaire au mandrinage.

On peut encore exercer des contraintes de compression avec les techniques dites de grenaillage par cavitation (*cavitation peening)* ou à l'aide d'un jet d'eau.

### Traitement thermique

Le traitement thermique peut comporter un apport de chaleur pour ramollir le liant servant à la fixation du bouclier sur l'âme, qui est typiquement une colle epoxy ou cyano acrylique.

L'apport de chaleur peut être réalisé par conduction ou convection ou rayonnement ou induction, ou une combinaison d'au moins deux de ces modes de transferts thermiques.

Les températures atteintes peuvent être comprises entre quelques degrés (20°C) et plusieurs centaines de degrés tout en restant en dessous de la température de fusion ou de dégradation de l'âme et de la peau, et usuellement entre 20° et 200°C.

On peut utiliser un dispositif soufflant de l'air chaud. En variante, on peut placer la pièce dans un four, une étuve ou une installation comprenant des panneaux rayonnants ou des systèmes de chauffage par induction.

Dans le cas de la production de froid, on peut utiliser un réfrigérateur, congélateur, surgélateur, de l'azote liquide, un tube effet vortex ou du vide pour refroidir la pièce à traiter à une température comprise de préférence entre -273°C et 0°C.

### Âme

De façon générale, l'âme peut être composite avec tous types de matériaux, non limités à des fibres de carbone, par exemple des fibres de verre, d'aramide, et/ou de carbure de silicium, entre autres possibilités. L'âme peut être monolithique ou sandwich. Les procédés de fabrication de ces pièces peuvent être divers et recouvrir l'ensemble des procédés de fabrication à base de thermodurcissables et thermoplastiques, dont le drapage, le tissage, le RTM, le LRI, l'estampage, le thermoformage, la thermocompression, entre autres.

La matrice de l'âme peut être une résine polyester, époxyde, vinylester, phénolique, ou polyimide, cette liste n'étant pas limitative.

L'âme peut encore être métallique, par exemple en aluminium ou magnésium.

De façon générale, l'âme peut comporter une matrice chargée ou renforcée de diverses manières.

### Liant

Tout type de colle peut être utilisé, le liant n'étant pas limité à une colle epoxy ou cyanoacrylique.

### Bouclier

Le bouclier est de préférence métallique, et peut notamment être en titane ou en l'un de ses alliages. Le bouclier peut être en matériau métallique ferromagnétique ou non ferromagnétique.

Le bouclier est par exemple en un matériau choisi parmi les alliages de titane, les alliages d'aluminium, les alliages à base de nickel, les alliages à base de cuivre, les alliages de magnésium, Ta6V, Ti550, 7075, 2024, 2017, Inconel® (alliages comprenant une grande proportion de nickel et de chrome et parfois de fer, entre autres composés, ces alliages ayant des propriétés mécaniques comparables à celle d'un acier inoxydable), Invar® (alliage de fer et de nickel, à coefficient de dilatation très faible).

### Opération préalable d'usinage du bouclier

Afin de faciliter le décollement du bouclier, il peut être réalisé une opération amont d'usinage pour retirer une partie frontale du bouclier métallique. Cet usinage peut être réalisé par différents procédés d'enlèvement de matière dont le fraisage, la découpe jet d'eau, le meulage, le ponçage, entre autres. Cette opération est préférentiellement réalisée avant toute autre opération.

Sur la figure 3 on a indiqué par un trait discontinu la limite de la partie enlevée par usinage. On voit que celle-ci concerne seulement la partie frontale 20 et une partie du liant 14, l'âme 11 n'étant pas affectée.

Après usinage, le bouclier 12 est en deux morceaux disjoints, qui peuvent être traités individuellement pour les séparer de l'âme.

### Exemple

On traite une pale de turbomachine telle que représentée sur les figures 1 et 2 comportant une âme en composite fibres de carbone tissée 3D et une peau en titane collée sur l'âme, formant bouclier.

On traite la peau à l'aide d'un pistolet de grenaillage STRESSVOYAGER® de la société SONATS équipé d'un embout ER18-2 équipés d'aiguilles de diamètre 3mm de façon à obtenir un niveau de contraintes équivalent à une intensité ALMEN de F20A. L'embout est déplacé le long de l'aube, sur la peau.

Ensuite, la peau ainsi traitée est exposée à la chaleur d'un décapeur à air chaud délivrant de l'air à 350°C.

On constate que la peau se déforme du fait des contraintes de compression précédemment introduites, et peut être pelée assez facilement sans endommager l'âme.

L'invention n'est pas limitée à cet exemple et s'applique à de multiples pièces comportant une âme en un premier matériau sur laquelle est collée une peau servant de renfort structurel.

L'expression « comportant un » doit être comprise comme étant synonyme de « comprenant au moins un », sauf si le contraire est spécifié

## Revendications

1. Procédé de traitement d'une pièce composite (10) comportant un bouclier de protection métallique (12) fixé sur une âme (11) à l'aide d'un liant (14), en vue de séparer le bouclier de l'âme, comportant les étapes consistant à :
a) soumettre le bouclier métallique à des contraintes de compression tendant à l'allonger en introduisant des contraintes de compression dans le bouclier métallique,
b) si nécessaire, chauffer la pièce ou la refroidir pour ramollir ou fragiliser le liant.

2. Procédé selon la revendication 1, l'étape a) étant effectuée avant l'étape b).

3. Procédé selon la revendication 1, l'étape b) étant effectuée avant l'étape a).

4. Procédé selon la revendication 1, les étapes a) et b) ayant lieu simultanément, l'étape a) ayant lieu dans un four, une étuve ou dans une enceinte réfrigérée, ou en utilisant une source de chaleur ou de froid jumelée avec un outil utilisé pour exercer les contraintes de compression, notamment un outil de redressage.

5. Procédé selon la revendication 1, l'étape a) étant appliquée exclusivement.

6. Procédé selon l'une quelconque des revendications précédentes, l'introduction des contraintes de compression à l'étape a) étant effectuée mécaniquement ou par onde de choc.

7. Procédé selon l'une quelconque des revendications précédentes, l'étape a) étant mise en oeuvre de manière à générer une déformation plastique du bouclier métallique, et induire dans ledit bouclier des contraintes résiduelles.

8. Procédé selon la revendication 6, l'introduction des contraintes de compression étant effectuée par grenaillage de précontrainte conventionnel ou ultrasons, redressage, martelage, galetage, dont LPB, flap-peening, choc laser, auto frettage, grenaillage par cavitation, jet d'eau et/ou choc magnétique.

9. Procédé selon la revendication 8, l'introduction des contraintes de compression étant effectuée par grenaillage, de préférence par grenaillage à ultrasons et de préférence encore le grenaillage étant effectué à l'aide d'un appareil à projectile(s) captif(s).

10. Procédé selon l'une quelconque des revendications précédentes, l'intensité ALMEN de traitement engendrant les contraintes de compression étant d'au moins F10N à F70C, mieux F30N à F10C.

11. Procédé selon l'une quelconque des revendications précédentes, l'apport de chaleur ou de froid à l'étape b) étant réalisé par conduction et/ou convection et/ou rayonnement et/ou induction.

12. Procédé selon l'une quelconque des revendications précédentes, l'âme (11) comportant des fibres et une matrice, notamment des fibres de verre, carbone, d'aramide, de carbure de silicium, la matrice comportant une résine, notamment polyester, époxyde, vinylester, phénolique, ou polyamide.

13. Procédé selon l'une quelconque des revendications 1 à 12, la pièce (10) étant une pale ou une aube d'une turbomachine et le bouclier (12) définissant le bord d'attaque (13) de cette pale ou aube.

14. Procédé selon l'une quelconque des revendications précédentes, le bouclier étant séparé de l'âme, et de préférence après décollement de l'âme, remplacée par un nouveau bouclier métallique collé sur l'âme.

15. Procédé selon l'une quelconque des revendications précédentes, le bouclier métallique étant usiné avant l'introduction des contraintes de compression, de préférence pour éliminer une partie frontale (20) du bouclier métallique.

## Patentansprüche

1. Verfahren zum Behandeln eines Verbundstoffteils (10), umfassend ein Metallschutzschild (12), das an einem Kern (11) mithilfe eines Bindemittels (14) befestigt ist, um das Schild von dem Kern zu trennen, umfassend die Schritte:
a) Aussetzen des Metallschilds an Druckspannungen, um es zu auszudehnen, indem Druckspannungen in das Metallschild eingebracht werden,
b) gegebenenfalls Erhitzen des Teils oder es abkühlen, um das Bindemittel aufzuweichen oder zu verspröden.

2. Verfahren nach Anspruch 1, wobei Schritt a) vor Schritt b) ausgeführt wird.

3. Verfahren nach Anspruch 1, wobei Schritt b) vor Schritt a) ausgeführt wird.

4. Verfahren nach Anspruch 1, wobei die Schritte a) und b) gleichzeitig stattfinden, wobei der Schritt a) in einem Ofen, einem Heizapparat oder in einer Kühlkammer stattfindet, oder unter Verwendung einer Wärme- oder Kältequelle in Verbindung mit einem Werkzeug, das verwendet wird, um die Druckspannungen anzulegen, insbesondere einem Richtwerkzeug.

5. Verfahren nach Anspruch 1, wobei Schritt a) ausschließlich angewendet wird.

6. Verfahren nach einem der vorhergehenden Ansprüche, wobei das Einbringen von Druckspannungen in Schritt a) mechanisch oder durch Stoßwellen erfolgt.

7. Verfahren nach einem der vorhergehenden Ansprüche, wobei Schritt a) durchgeführt wird, um eine plastische Verformung des Metallschilds zu erzeugen und in dem Schild Restspannungen zu induzieren.

8. Verfahren nach Anspruch 6, wobei das Einbringen von Druckspannungen durch herkömmliches Verfestigungsstrahlen oder Ultraschall-Verfestigungsstrahlen, Richten, Hämmern, Rollieren, einschließlich LPB (verformungsarmes Polieren), Flap-Peening, Laser-Schock, Autofrettage, Kavitationsstrahlen, Wasserstrahlen und/oder magnetisches Schockstrahlen ausgeführt wird.

9. Verfahren nach Anspruch 8, wobei das Einbringen der Druckspannungen durch Strahlen, vorzugsweise durch Ultraschallstrahlen ausgeführt wird und noch bevorzugter wird das Strahlen mithilfe einer Vorrichtung mit unverlierbaren(m) Geschoss(en) ausgeführt.

10. Verfahren nach einem der vorhergehenden Ansprüche, wobei die ALMEN-Intensität der die Druckspannungen erzeugenden Behandlung mindestens F10N bis F70C, besser F30N bis F10C, beträgt.

11. Verfahren nach einem der vorhergehenden Ansprüche, wobei die Zufuhr von Wärme oder Kälte zu Schritt b) durch Konduktion und/oder Konvektion und/oder Strahlung und/oder Induktion erfolgt.

12. Verfahren nach einem der vorhergehenden Ansprüche, wobei der Kern (11) Fasern und eine Matrix umfasst, insbesondere Glas-, Kohlenstoff-, Aramid-, Siliziumcarbidfasern, wobei die Matrix insbesondere ein Harz, insbesondere ein Polyester-, Epoxid-, Vinylester-, Phenol- oder Polyamidharz, umfasst.

13. Verfahren nach einem der Ansprüche 1 bis 12, wobei das Teil (10) eine Schaufel oder ein Blatt einer Turbomaschine ist und das Schild (12) die Anströmkante (13) dieser Schaufel oder dieses Blatts definiert.

14. Verfahren nach einem der vorhergehenden Ansprüche, wobei das Schild von dem Kern getrennt ist und nach dem Ablösen von dem Kern vorzugsweise durch ein neues Metallschild ersetzt wird, das auf den Kern geklebt ist.

15. Verfahren nach einem der vorhergehenden Ansprüche, wobei das Metallschild vor dem Einbringen der Druckspannungen bearbeitet wird, vorzugsweise um einen vorderen Abschnitt (20) des Metallschilds zu entfernen.

## Claims

1. Process for treating a composite part (10) comprising a protective metal shield (12) fastened to a core (11) with the aid of a binder (14), with a view to separating the shield from the core, comprising the steps consisting in:
a) subjecting the metal shield to compressive stresses that tend to elongate it by introducing compressive stresses into the metal shield,
b) if necessary, heating the part or cooling it in order to soften or embrittle the binder.

2. Process according to Claim 1, step a) being carried out before step b).

3. Process according to Claim 1, step b) being carried out before step a).

4. Process according to Claim 1, steps a) and b) taking place simultaneously, step a) taking place in a furnace, an oven or in a refrigerated chamber, or by using a source of heat or cold coupled with a tool used to exert the compressive stresses, in particular a straightening tool.

5. Process according to Claim 1, step a) being applied exclusively.

6. Process according to any one of the preceding claims, the introduction of the compressive stresses in step a) being carried out mechanically or by shock wave.

7. Process according to any one of the preceding claims, step a) being carried out so as to generate a plastic deformation of the metal shield, and induce residual stresses in said shield.

8. Process according to Claim 6, the introduction of the compressive stresses being carried out by conventional or ultrasonic shot peening, straightening, hammering, roller burnishing, including LPB, flap peening, laser shock peening, autofrettage, cavitation peening, water-jet peening and/or magnetic shock peening.

9. Process according to Claim 8, the introduction of the compressive stresses being carried out by shot peening, preferably by ultrasonic shot peening, and more preferably, the shot peening being carried out with the aid of a captive projectile machine.

10. Process according to any one of the preceding claims, the ALMEN intensity of the treatment generating the compressive stresses being at least F10N to F70C, better still F30N to F10C.

11. Process according to any one of the preceding claims, the supply of heat or cold in step b) being carried out by conduction and/or convection and/or radiation and/or induction.

12. Process according to any one of the preceding claims, the core (11) comprising fibres and a matrix, in particular glass fibres, carbon fibres, aramid fibres or silicon carbide fibres, the matrix comprising a resin, in particular polyester, epoxide, vinylester, phenolic or polyamide resin.

13. Process according to any one of Claims 1 to 12, the part (10) being a blade or a vane of a turbomachine and the shield (12) defining the leading edge (13) of this blade or vane.

14. Process according to any one of the preceding claims, the shield being separated from the core, and preferably after debonding from the core, replaced by a new metal shield adhesively bonded to the core.

15. Process according to any one of the preceding claims, the metal shield being machined before the introduction of the compressive stresses, preferably in order to remove a frontal portion (20) of the metal shield.
